# EUROPEAN PATENT APPLICATION

(11) **EP 3 998 654 A1**
(43) Date of publication of application: **18.05.2022**
(21) Application number: 21158168.1
(22) Date of filing: 19.02.2021
(51) Int. Cl.: H01M 4/04, H01M 4/131, H01M 4/1391, H01M 4/36, H01M 4/505, H01M 4/525, H01M 4/62, H01M 10/052, H01M 10/0525, H01M 4/02

(54) **HYBRID ELECTRODE**

(71) Applicant: Lilium eAircraft GmbH, 82234 Wessling (DE)
(72) Inventor: KRAFFT, Roman, 82234 Wessling (DE); JANSE VAN RENSBURG, Anqelique, 82234 Wessling (DE); NORTHWOOD, John, 82234 Wessling (DE); PITRE, Ryan, 82234 Wessling (DE); FRITSCH, Gerd, 82234 Wessling (DE)
(74) Representative: Feller, Frank

(57) **Abstract**

The present invention relates to an electrode comprising at least one metal foil and at least two layers each comprising at least one lithium ion acceptor.

## Description

The present invention relates to an electrode comprising at least one metal foil and at least two layers each comprising at least one lithium ion acceptor.

Most lithium-ion batteries for portable applications are metal-oxide or phosphate-based. The system usually consists of a metal oxide or phosphate containing positive electrode (cathode) and a graphite carbon in the negative electrode (anode). One of the main advantages of the cobalt-based battery is its high energy density. Long run-time makes this chemistry attractive for cell phones, laptops and cameras.

The widely used cobalt-based lithium-ion battery, however, has drawbacks; it offers a relatively low discharge current, as the battery design and chemistry introduce a physical limitation to the diffusion of the ions, thereby increasing the resistances and lowering the power capability. In turn, a high charging load would overheat the pack and its safety would be jeopardized. The safety circuit of the cobalt-based battery is typically limited to a charge and discharge rate of about 1C. Another drawback is the increase of the internal resistance that occurs with cycling and aging. After 2-3 years of use, the pack often becomes unserviceable due to a large voltage drop under load that is caused by high internal resistance.

The range of battery-driven devices is tremendously increasing and nowadays also covers e.g. automotive and aviation applications. Clearly, the respective energy and power profiles of the energy storage systems (ESS) used in such applications are more and more demanding. Exemplarily, batteries in automotive and aviation applications require both, high power, e.g. during acceleration, starting or landing, but also high energy density, e.g. to increase the overall range of such vehicles.

Since conventional lithium ion batteries can either supply a high power or high energy, there is a long-lasting need for energy storage systems (ESS) that provide both high power and high energy capacity. Various attempts have been made to improve the power and energy capability of electrochemical cells, in particular lithium ion cells. ESS design changes of the used electrolyte are, however, limited to the readily available chemistries. Investigators have considered several possibilities to improve cell performance. Significant research has been made in the field of improved electrolytes (new electrolytes with enhanced stability or additives for high performance), anodes, cathodes (thickness, porosity, and/or material optimization), and solid electrolyte interface (SEI) layers (chemical modification). However, the prior art cannot overcome the above described predicament of high-power/low-energy or high-energy/low-power EES.

Moreover, module designers aim to improve the power/energy performance of ESS by combining high energy cells and high power cells and programming the best parallel and series configuration for the desired energy profile. This approach, however, introduces a higher complexity of the system and therefore a higher failure rate.

Thus, it is a long-lasting need to provide energy storage systems in that they can provide a high (dis)charge rate and simultaneously have sufficient energy density. This problem has surprisingly been solved by the present invention.

In a first aspect the present invention relates to an electrode, comprising
a) at least one metal foil, and
b) at least two layers each comprising at least one lithium ion acceptor.

In a preferred embodiment, the electrode is a cathode or an anode, more preferably a cathode.

The metal foil according to the invention preferably contains aluminum or copper, more preferably aluminum. In a preferred embodiment, the metal foil is an aluminum foil. The metal foil preferably has a thickness of 5-30 µm, more preferably 10-20 µm.

According to the invention, the electrode comprises at least two layers, particularly at least two different layers, which each contains at least one lithium ion acceptor.

The lithium ion acceptor is a material that is capable of accepting lithium ions, preferably during discharge processes, and storing lithium ions particularly in a discharged state. Lithium ion acceptors are preferably used in lithium ion batteries as electrode, preferably cathode, materials. Preferably the lithium ion acceptor can also act as a lithium ion donor during charge processes. Lithium ion acceptors are well known in the prior art and are preferably selected from the group consisting of LiCoO₂, lithium-nickel-manganese-cobalt-oxide, lithium-nickel-cobalt-aluminum-oxide, lithium-manganese-oxide, LiFePO₄ and mixtures thereof.

Particularly preferred lithium ion acceptors according to the invention are
- LiCoO₂,
- mixed oxides of LiCoO₂, and LiNiO₂, such as LiNi₁₋ₓCoₓO₂ with x being in the range of 0.01-0.2,
- mixed oxides of LiCoO₂, LiNiO₂ and LiMnO₂, such as LiNi_{0.33}Co_{0.33}Mn_{0.33}O₂,
- mixed oxides of LiCoO₂, LiNiO₂, LiCoO₂ and LiAlO₂ such as LiNi_{1-x-y}CoₓAl_{y}O₂, such as LiNi_{0.85}Co_{0.1}Al_{0.05}O₂, with x and y independently being in the range of 0.01-0.2,
- LiMn₂O₄,
- LiFePO₄,
- and mixtures thereof.

In a preferred embodiment, the layer further comprises at least one of a binder and a conductive material in addition to the lithium ion acceptor. More preferably, the layer comprises a lithium ion acceptor as defined above, at least one binder and optionally a conductive material. The binder material is preferably polyvinylidene fluoride (PVDF), carboxymethyl cellulose (CMC) or mixtures thereof. The conductive material is preferably electrically conductive carbon black, carbon nanotubes, or mixtures thereof as known in the art. Preferred carbon blacks may be super P, acetylene black preferred carbon nanotubes are single walled carbon nanotubes . By adapting the amounts and types of binder and conductive material, respectively, the characteristics of an electrode may be controlled in view of their porosity and conductivity, respectively.

In a preferred embodiment, the first layer is applied to at least one side of the metal foil, particularly is applied directly to at least one side of the metal foil. In a more preferred embodiment, the first layer is applied, preferably applied directly, to both sides of the metal foil. "Direct application" or "applied directly" as used in the present invention means that there is no interlayer between the respective layers.

The second layer may be applied to the first layer, preferably the second layer is applied directly to the first layer.

The electrode comprises at least two layers, preferably two layers. There are other embodiments wherein more than two layers, e.g. 3, 4, 5, 6, 7, 8, 9 or 10 layers are used for the electrode according to the invention. In such embodiment, the electrodes are assembled layer-by-layer, preferably such that the (n+1)^{th} layer is applied to, more preferably applied directly to, the n^{th} layer, wherein n is e.g. 1-10, preferably 1-5.

Each layer is preferably applied to the metal foil or the underlying layer on both sides of the metal foil, thereby preferably forming a mirror-symmetrical assembly with the metal foil serving as mirror plane.

In one embodiment, the first layer may be applied, preferably applied directly, to one side of the metal foil, wherein the second layer may be applied, preferably applied directly, to the other side of the metal foil.

In one embodiment, the at least two layers are each different from another. In one embodiment, the at least two layers differ from each other in their composition, porosity, mass loading and/or density.

In a preferred embodiment, the at least two layers each contain the identical lithium ion acceptor.

In another embodiment, the at least two layers differ in at least one of the type or the ratio of the lithium ion acceptor, type or the ratio of the binder and optionally type or the ratio of the conductive agent.

In one aspect of the invention, the layer that is closer to the metal foil has a higher porosity than the layer that is more remote from the metal foil (wherein all layers are preferably on the same side of the metal foil). More preferably, the first layer which is applied to the metal foil has a higher porosity than the second layer applied to the first layer.

The porosity may be measured according to known techniques in the art, such as mercury porosimetry, density, thermography.

The thickness of each layer preferably is independently in the range of 10-100 µm, preferably 20-50 µm. In one embodiment, the thickness of the respective layers is substantially the same. In one embodiment, the (volume) ratio of the first layer to the second layer is 1:5 to 5:1, more preferably 1:5 to 1:3.

Considering a constant thickness of the layers over the metal foil, the ratio of the thickness of the first layer to the thickness of the second layer may be 1:5 to 5:1, preferably 1:5 to 1:3.

In a preferred embodiment, the first layer comprises
75-95 wt.-%, preferably 85-93 wt.-%, of lithium ion acceptor,
1-10 wt.-%, preferably 2-8 wt.-%, of binder, and
5-20 wt.-%, preferably 8-15 wt.-%, of conductive agent.

The second layer preferably comprises
90-98 wt.-%, preferably 92-96 wt.-%, of lithium ion acceptor,
0-5 wt.-%, preferably 1-4 wt.-%, of binder, and
0-5 wt.-%, preferably 0,5-3 wt.-%, of conductive agent.

In another aspect of the present invention, a method is provided for producing an electrode according to the invention, comprising the steps:
i) providing at least two slurries, each comprising at least one lithium ion acceptor, at least one binder, optionally at least one conductive agent and at least one liquid medium,
ii) applying a first slurry to at least one side, preferably to both sides of a metal foil,
iii) at least partially removing the liquid medium to form a first layer,
iv) optionally compacting the first layer obtained after step iii),
v) applying a second slurry to the first layer,
vi) at least partially removing the liquid medium to form a second layer,
vii) optionally compacting the second layer obtained after step vi) and optionally the first layer,
viii) optionally repeating the steps v) to vii) with another slurry obtained according to step i) at least once,
ix) optionally cutting the product obtained after step vii) or viii) into a form which is suitable for an electrode.

The liquid medium according to step i) may be any solvent, in which the binder is at least partially soluble. Preferred liquid media are water, NMP and ethanol, more preferably water, NMP, or mixtures thereof.

The slurries according to step i) are prepared by dispersing at least one lithium ion acceptor, at least one binder and optionally at least one conductive agent within the at least one liquid medium. The dispersing process may be performed by suitable methods known in the art, such as using high-shear dispersers, ultraturrax, etc. The at least one lithium ion acceptor, the at least one binder and optionally the at least one conductive agent are preferably independently present in an average particle diameter (d50) of 5 to 15 µm, preferably 7 to 12 µm.

The slurry may further comprise additives such as viscosity adjusting agents, excipients, aliphatic alcohols or surfactants.

A first slurry obtained according to step i) is applied in step ii) to at least one side, preferably to both sides of a metal foil, particular a sheet metal foil, as described above. The application of the first and each subsequent slurry can independently be effected by conventional means, such as spreading, spraying, rolling, and dipping. The application of the slurry in steps ii) and v) may be in a continuous process using a continuous metal foil.

According to step iii), the liquid medium is at least partially removed from the first slurry to form a first layer. The removal of liquid medium can be performed at increased temperatures such as 30 to 250°C, more preferably 80 to 150°C. In order to accelerate the removal, step iii) may be performed under reduced pressure. The content of liquid medium in the first layer after step iii) is preferably in the range of 0.1 to 3 wt.-% of liquid medium based on the weight of the first layer after step iii).

In subsequent step iv), the first layer may be compacted, e.g. by rolling, pressing or calendaring, thereby increasing the density of the first layer by about 10 - 50%.

According to step v), a second slurry is applied to the first layer, preferably applied directly to the first layer. Subsequently, the liquid medium of the second slurry is at least partially removed to form a second layer. Removal of the liquid medium is performed as described above for step iii). The content of liquid medium after step vi) is preferably 0.1 to 3 wt.-%, preferably 0.5 to 1.5 wt.-% based on the total weight of the first and second layer.

According to step vii), the second layer and optionally the first layer may be compacted as described above. In one embodiment, the first layer is compacted according to step iv), and the second layer is compacted according to step vii). In the latter case the density of the second layer is preferably increased by 5-20% due to the compacting in step vii). In another embodiment, step iv) is omitted, so that the first and the second layer are simultaneously compacted in step vii). In the latter case the density of the first and the second layer is preferably increased by 1-15% due to the compacting in step vii).

The steps v) to vii) may be repeated with another slurry obtained according to step i) at least once.

According to step ix), the product obtained is cut into a form which is suitable for an electrode. Usually, a knife, milling apparatus, laser and/or water jet are used for cutting.

In a preferred embodiment, the method according to the invention is continuous.

In another aspect, the present invention provides an electrode, particularly a cathode, obtainable according to the above-described process.

In another aspect, the present invention is directed to an electrochemical cell, which comprises at least one electrode according to the present invention.

The electrochemical cell may further comprise at least one additional electrode, preferably an anode, an electrolyte and at least one separator.

The additional electrode, preferably the anode, is preferably a metal foil, which is coated with a lithium ion donor that is a material that is capable of releasing lithium ions, preferably during discharge processes, and storing lithium ions preferably in a charged state. Preferably, the lithium ion donor can also act as a lithium ion acceptor during charge processes. Suitable lithium ion donors are graphite, silicon, lithium titanate, tin dioxide or mixtures thereof.

The electrolyte is particularly an ionic liquid, an aprotic salt solution, a carbonate, such as dimethyl carbonate (DMC) or diethyl carbonate (DEC) or mixtures thereof.

The separator may be a polyolefin membrane, such as a polyethylene, polypropylene or polyethylene terephthalate membrane. The membrane may be optionally coated with ceramics, PVDF or mixtures thereof.

A functioning electrochemical cell unit comprises a cathode, an anode and an electrolyte, whereas the cathode and the anode space are separated by a membrane. The electrochemical cell according to the invention may be an electrochemical cell unit or a plurality of electrochemical cell units. In certain embodiments, 2-100, preferably 20-80 electrochemical cell units are assembled within one electrochemical cell. In the preferred embodiment, the electrodes and the separators are assembled to form layered stacks. Preferably, the two outermost electrodes represent the cathode and the anode, respectively, whereas each electrode within the stack serves as an electrode for two adjacent electrode spaces. That is, in a preferred embodiment, the electrochemical cell comprising several electrochemical cell units have the following assembly: anode-separator-(cathode-separator-anode-separator)n-cathode, with n being preferably 1-100. In the latter embodiment, only one electrolyte is used within the electrochemical cell.

Thus, in a further aspect, the present invention is directed to the use of an electrode according to the present invention in an electrochemical cell, particularly lithium ion cells, lithium metal cells, or in super capacitors (super caps).

The electrochemical cells according to the present invention simultaneously supply high power and high energy. According to the invention, an electrode design has been developed, which combines the characteristics of electrodes capable of a high discharge rate and having high energy density. The electrodes according to the invention can easily be produced by conventional and continuous coating techniques. State of the art electrode design only uses one defined active material for an electrode meaning that all nuances of high power or high energy are produced separately, however, never display both ends of the spectrum. The present invention hybridizes both into one electrode/cell leading to higher power/energy ratios accessible in the same cell.

Cells designed by this method can be used in all applications requiring high power and high energy, without the need of reinventing or using novel or next-generation chemistry.

The electrodes and electrochemical cells according to the invention are particularly useful in aviation applications, such as eVTOLs, that require high power for the hovering, starting and landing phase, while it is also required to have high energy density cells for increasing the range. The electrochemical cell according to the invention, thus, provides a higher range of eVTOLS per cell weight under standardized conditions.

The inventors have found that the electrochemical cells according to the present invention moreover have a longer cycle life due to optimized usage.

The following invention is illustrated by the following examples without being limited thereto.

### Example

Hybrid Electrode Composition:
Metal Foil: aluminum; thickness 14 µm

### Composition First Layer:

| | |
|---|---|
| Active Material: lithium manganese cobalt nickel oxide | 94% |
| Binder: PVDF | 2% |
| Conductive carbon: Super P | 2% |
| Carbonanotubes | 2% |
| Solvent: NMP | |
| Slurry Solids: 50 % | |

All components have been slurried by ultraturrax.

### Lamination conditions:

coating
load: 3.3 mg/cm2
thickness: 25 µm

### Drying:

2 m/min each through 110 °C, 110 °C, and 150 °C zones

### Post coating drying:

140 °C, 0.09 MPa, 600 min

### Compacting step:

Press at 50 MPa
Thickness of first layer: 10 µm
Density: 3.4 g/cm³

### Composition Second Layer

| | |
|---|---|
| Active Material: lithium manganese cobalt nickel oxide | 96% |
| Binder: PVDF | 2.5% |
| Conductive carbon Super P | 0.75% |
| Carbonnanotubes | 0.75% |
| Solvent: NMP | |
| Slurry Solids: 50% | |

All components have been slurried by ultraturrax.

### Lamination conditions:

coating
load: 13 mg/cm²
thickness 85 µm
Drying: 2 m/min through 110 °C, 110 °C, and 150 °C zones

### Post coating drying:

140 °C, 0.09 MPa, 600 min

### Compacting step:

press at 50 MPa
total thickness of second layer: 85 µm
density: 3.4 g/cm3

The following items are subject to the present invention:
1. Electrode comprising
   a) at least one metal foil and
   b) at least two layers each comprising at least one lithium ion acceptor.
2. Electrode according to item 1, wherein the electrode is a cathode.
3. Electrode according to item 1 or 2, wherein the metal foil contains aluminum or copper.
4. Electrode according to any of the preceding items, wherein the metal foil has a thickness of 5-30 µm, preferably 10-20 µm.
5. Electrode according to any of the preceding items, wherein the lithium ion acceptor is selected from the group consisting of LiCoO2, lithium-nickel-manganese-cobalt-oxide, lithium-nickel-cobalt-aluminum-oxide, lithium-manganese-oxide, LiFePO4 and mixtures thereof.
6. Electrode according to any of the preceding items, wherein the layers further comprise at least one of a binder, preferably polyvinylidene fluoride (PVDF) or carboxymethyl cellulose (CMC), and a conductive material, preferably carbon black, carbon nanotubes or mixtures thereof.
7. Electrode according to any of the preceding items, wherein the first layer is applied directly to the metal foil.
8. Electrode according to any of the preceding items, wherein the second layer is applied to, preferably applied directly to, the first layer.
9. Electrode according to any of the preceding items, wherein the (n+1)^{th} layer is applied to, preferably directly to, the n^{th} layer.
10. Electrode according to any of the preceding items, wherein the at least two layers are different from each other.
11. Electrode according to any of the preceding items, wherein the at least two layers differ from each other in their composition, porosity, mass loading and/or density, preferably porosity.
12. Electrode according to any of the preceding items, wherein the at least two layers contain the identical lithium ion acceptor.
13. Electrode according to any of the preceding items, wherein the at least two layers differ in at least one of the type or the ratio of the lithium ion acceptor, the binder, and optionally the conductive agent.
14. Electrode according to any of the preceding items, wherein the layer which is closer to the metal foil has a higher porosity than the layer which is more remote from the metal foil, preferably the first layer which is applied to the metal foil has a higher porosity than the second layer applied to the first layer.
15. Electrode according to any of the preceding items, wherein the thickness of the layer is independently in the range of 10-100 µm, preferably 20-50 µm.
16. Electrode according to any of the preceding items, wherein the ratio of the thickness of the first layer to the thickness of the second layer is 1:5 to 5:1, preferably 1:5 to 1:3.
17. Electrode according to any of the preceding items, wherein the first layer comprises
   75 to 95 wt.-% of lithium ion acceptor,
   1 to 10 wt.-% of binder, and
   5 to 20 wt.-% of conductive agent.
18. Electrode according to any of the preceding items, wherein the second layer comprises
   90 to 98 wt.-% of lithium ion acceptor,
   0 to 5 wt.-% of binder, and
   0 to 5 wt.-% of conductive agent.
19. Method for producing an electrode according to any of items 1-18, comprising the steps
   i) providing at least two slurries, each comprising at least one lithium ion acceptor, at least one binder, optionally at least one conductive agent and at least one liquid medium,
   ii) applying a first slurry to at least one side, preferably to both sides of a metal foil,
   iii) at least partially removing the liquid medium to form a first layer,
   iv) optionally compacting the first layer obtained after step iii),
   v) applying a second slurry to the first layer,
   vi) at least partially removing the liquid medium to form a second layer,
   vii) optionally compacting the second layer obtained after step vi) and optionally the first layer,
   viii) optionally repeating the steps v) to vii) with another slurry obtained according to step i) at least once,
   ix) optionally cutting the product obtained after step vii) or viii) into a form which is suitable for an electrode.
20. Process according to item 19, wherein the liquid medium is selected from the group consisting of water, NMP, ethanol, preferably water, NMP, or mixtures thereof.
21. Process according to any of items 19 or 20, wherein the slurry is obtained by dispersing at least one lithium ion acceptor, at least one binder and optionally at least one conductive agent in at least one liquid medium.
22. Process according to any of items 19-21, wherein the slurry is applied by spreading, spraying, rolling, and/or dipping.
23. Process according to any of items 19-22, wherein step iii) is performed at increased temperatures, preferably at 30-250°C, more preferably 80-150°C, and optionally under reduced pressure.
24. Process according to any of items 19-23, wherein the compacting according to step iv) and/or vii) is independently conducted via rolling, calendering or pressing.
25. Process according to any of items 19-24, wherein step ix) is performed using a knife, a milling apparatus, a laser, and/or a water jet.
26. Electrode, obtainable according to a process according to any of items 19-25.
27. Electrochemical cell, comprising at least one electrode according to any of items 1-18 or according to item 26.
28. Electrochemical cell according to item 27, further comprising at least one additional electrode, an electrolyte and at least one separator.
29. Electrochemical cell according to item 27 or 28, wherein the additional electrode is a metal foil coated with graphite, silicon, lithium titanate, tin dioxide or mixtures thereof.
30. Electrochemical cell according to any of items 27-29, wherein the electrolyte is selected from the group consisting of ionic liquid, aprotic salt solutions, carbonates, such as dimethyl carbonate (DMC) or diethyl carbonate (DEC), or mixtures thereof.
31. Electrochemical cell according to any of items 27-30, wherein the separator is a polyolefin membrane, e.g. PE or PP, or a polyethylene terephthalate membrane, which is optionally coated with ceramics, PVDF or mixtures thereof.
32. Use of an electrode according to any of items 1-18 or according to item 26 in an electrochemical cell, particularly lithium ion cells, lithium metal cells, and in super capacitors (super caps).
33. Use according to item 32 in aviation applications.

## Claims

1. Electrode, preferably cathode, comprising
a) at least one metal foil, preferably containing aluminum or copper, and
b) at least two layers each comprising at least one lithium ion acceptor.

2. Electrode according to claim 1, wherein the lithium ion acceptor is selected from the group consisting of LiCoO2, lithium-nickel-manganese-cobalt-oxide, lithium-nickel-cobalt-aluminum-oxide, lithium-manganese-oxide, LiFePO4 and mixtures thereof.

3. Electrode according to any of the preceding claims, wherein the layers further comprise at least one of a binder, preferably polyvinylidene fluoride (PVDF) or carboxymethyl cellulose (CMC), and a conductive material, preferably carbon black, carbon nanotubes or mixtures thereof.

4. Electrode according to any of the preceding claims, wherein the first layer is applied directly to the metal foil and/or wherein the second layer is applied to, preferably applied directly to, the first layer.

5. Electrode according to any of the preceding claims, wherein the at least two layers are different from each other and particularly differ from each other in their composition, porosity, mass loading and/or density, preferably porosity.

6. Electrode according to any of the preceding claims, wherein the at least two layers contain the identical lithium ion acceptor.

7. Electrode according to any of the preceding claims, wherein the at least two layers differ in at least one of the type or the ratio of the lithium ion acceptor, the binder, and optionally the conductive agent; particularly wherein the layer which is closer to the metal foil has a higher porosity than the layer which is more remote from the metal foil; more preferably wherein the first layer which is applied to the metal foil has a higher porosity than the second layer applied to the first layer.

8. Electrode according to any of the preceding claims, wherein the ratio of the thickness of the first layer to the thickness of the second layer is 1:5 to 5:1, preferably 1:5 to 1:3.

9. Electrode according to any of the preceding claims, wherein the first layer comprises
75 to 95 wt.-% of lithium ion acceptor,
1 to 10 wt.-% of binder, and
5 to 20 wt.-% of conductive agent,
and/or
wherein the second layer comprises
90 to 98 wt.-% of lithium ion acceptor,
0 to 5 wt.-% of binder, and
0 to 5 wt.-% of conductive agent.

10. Method for producing an electrode according to any of claims 1-9, comprising the steps
i) providing at least two slurries, each comprising at least one lithium ion acceptor, at least one binder, optionally at least one conductive agent and at least one liquid medium,
ii) applying a first slurry to at least one side, preferably to both sides of a metal foil,
iii) at least partially removing the liquid medium to form a first layer,
iv) optionally compacting the first layer obtained after step iii),
v) applying a second slurry to the first layer,
vi) at least partially removing the liquid medium to form a second layer,
vii) optionally compacting the second layer obtained after step vi) and optionally the first layer,
viii) optionally repeating the steps v) to vii) with another slurry obtained according to step i) at least once,
ix) optionally cutting the product obtained after step vii) or viii) into a form which is suitable for an electrode.

11. Process according to claim 10, wherein step iii) is performed at increased temperatures, preferably at 30-250°C, more preferably 80-150°C, and optionally under reduced pressure and/or wherein the compacting according to step iv) and/or vii) is independently conducted via rolling, calendering or pressing.

12. Electrode, obtainable according to a process according to any of claims 10-11.

13. Electrochemical cell, comprising at least one electrode according to any of claims 1-9 or according to claim 12, preferably further comprising at least one additional electrode, an electrolyte and at least one separator.

14. Electrochemical cell according to claim 13, wherein the additional electrode is a metal foil coated with graphite, silicon, lithium titanate, tin dioxide or mixtures thereof.

15. Electrochemical cell according to any of claims 13-14, wherein the electrolyte is selected from the group consisting of ionic liquid, aprotic salt solutions, carbonates, such as dimethyl carbonate (DMC) or diethyl carbonate (DEC), or mixtures thereof and/or wherein the separator is a polyolefin membrane, e.g. PE or PP, or a polyethylene terephthalate membrane, which is optionally coated with ceramics, PVDF or mixtures thereof.

16. Use of an electrode according to any of claims 1-9 or according to claim 12 in an electrochemical cell, particularly lithium ion cells, lithium metal cells, and in super capacitors (super caps), particularly in aviation applications.
